(19) Europäisches Patentamt
European Patent Office
Office européen des brevets

(11) Numéro de publication: **0 268 120**
**B1**

(12) **FASCICULE DE BREVET EUROPEEN**

(45) Date de publication du fascicule du brevet:
09.05.90

(51) Int. Cl.⁵: **B44F 5/00**, C04B 41/80,
B22F 3/26, C08J 9/40
// B65D85/40, G04B37/00

(21) Numéro de dépôt: 87115948.9

(22) Date de dépôt: 30.10.87

(54) **Matériau composite.**

(30) Priorité: 03.11.86 FR 8615380

(43) Date de publication de la demande:
25.05.88 Bulletin 88/21

(45) Mention de la délivrance du brevet:
09.05.90 Bulletin 90/19

(84) Etats contractants désignés:
AT CH DE FR GB IT LI SE

(56) Documents cités:
EP-A- 0 141 388
FR-A- 1 250 112
FR-A- 2 024 586
FR-A- 2 390 230
GB-A- 2 148 270
US-A- 1 328 833
US-A- 3 616 841

CHEMICAL ABSTRACTS,
vol. 88, no. 26, 26 juin 1978, page 57, résumé
no. 192304p, Columbus, Ohio, US; &
JP-A-78 60 263 (DAIKYO CHEMICAL CO.,
LTD) 05-01-1978

(73) Titulaire: ASULAB S.A., Faubourg du Lac 6,
CH-2501 Bienne(CH)

(72) Inventeur: Randin, Jean-Paul, Potat-Dessus 13,
CH-2016 Cortaillod(CH)
Inventeur: Gauckler, Ludwig, Gemsgasse 11,
CH-8200 Schaffhouse(CH)

(74) Mandataire: de Montmollin, Henri et al, ICB Ingénieurs
Conseils en Brevets SA Passage Max. Meuron 6,
CH-2001 Neuchâtel(CH)

ACTORUM AG

## Description

La présente invention concerne un matériau composite utilisable pour confectionner toute sorte d'objets, notamment des objets ornementaux ou décoratifs, c'est-à-dire des objets dont l'aspect plaisant est une caractéristique essentielle. De tels objets peuvent avoir eux-mêmes un aspect plaisant, ou être destinés à donner cet aspect plaisant à un autre objet auquel ils sont associés d'une manière quelconque.

Il est impossible d'énumérer tous les objets entrant dans cette catégorie, de même que les matériaux utilisés jusqu'à maintenant pour les confectionner.

Un but de la présente invention est de proposer un matériau composite utilisable notamment pour confectionner des objets ornementaux, dont l'aspect est nouveau et attrayant.

Un autre but de la présente invention est de proposer un procédé de fabrication de ce matériau composite.

Un autre but de la présente invention est de proposer un objet décoratif, notamment une boîte pour montre, confectionné dans ce matériau composite.

Ces buts sont respectivement atteints par le matériau composite, le procédé et l'objet décoratif revendiqués.

L'invention va être décrite maintenant à l'aide du dessin dans lequel:

La figure 1 est une vue schématique d'un morceau de matériau composite selon l'invention; et

La figure 2 représente une carrure de boîte de montre réalisée dans le matériau composite selon l'invention.

On connaît de nombreux corps qui sont désignés par le terme générique de "mousses rigides à porosité ouverte".

De telles mousses comportent essentiellement un squelette tridimensionnel rigide dont les éléments sont des filaments généralement non rectilignes et d'épaisseur variable, et/ou des parois généralement non planes et d'épaisseur également variable, percées d'ouvertures de forme irrégulière. Ces éléments sont bien entendu eux-mêmes rigides, et ils sont reliés les uns aux autres de manière à délimiter des cavités qui communiquent entre elles et avec l'extérieur de la mousse.

Les éléments du squelette de ces mousses peuvent être en matière plastique telle que le polyuréthane par exemple.

Ces éléments peuvent également être métalliques, comme dans les mousses décrites, avec leur procédé de fabrication, dans le brevet US-A 3 616 841 par exemple.

Parmi les nombreux métaux qui peuvent être utilisés pour fabriquer ces mousses, on peut citer à titre d'exemple non limitatif l'aluminium, le cuivre, le nickel, l'argent, des aciers comme l'acier inoxydable, etc....

Les éléments du squelette des mousses rigides à porosité ouverte peuvent encore être en céramique, comme dans les mousses décrites, avec leur procédé de fabrication, dans le brevet US-A 3 962 081 par exemple.

Parmi les céramiques qui peuvent être utilisées pour fabriquer ces mousses, on peut citer, toujours à titre d'exemple non limitatif, les oxydes de métaux tels que l'aluminium ou le zirconium, des mélanges de tels oxydes, le carbure ou le nitrure de silicium, etc....

On connaît en outre des mousses rigides à porosité ouverte dont le squelette comporte des éléments en carbone.

Il faut noter que la forme et les dimensions des éléments du squelette des mousses mentionnées ci-dessus, et donc la forme et les dimensions des cavités délimitées par ces éléments, sont déterminées par le procédé utilisé pour fabriquer ces mousses et peuvent être choisies très librement. En outre, ces formes et ces dimensions peuvent être sensiblement constantes dans tout le volume de la mousse, dont la structure est alors qualifiée de régulière, ou au contraire être variable, et même très variable, dans ce volume. Dans ce cas, la structure de la mousse est qualifiée d'irrégulière.

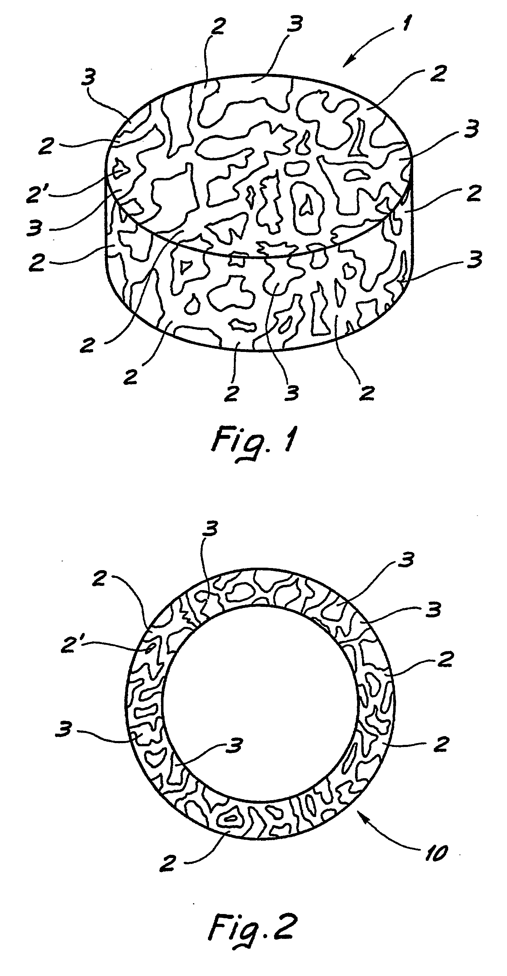

Un morceau du matériau composite selon l'invention, de forme arbitraire, est représenté à la figure 1 avec la référence 1.

Ce matériau 1 comporte une mousse rigide à porosité ouverte du genre de celles qui ont été décrites ci-dessus.

Dans cet exemple, la structure de cette mousse est très irrégulière, et les éléments de son squelette sont, pour la plupart, des parois percées d'ouvertures.

Il sera rendu évident par la suite de cette description que l'invention ne se limite pas à un matériau composite comportant ce type de mousse, mais qu'elle s'étend également aux matériaux composites comportant des mousses ayant un squelette dont les éléments sont, au moins partiellement, des filaments et/ou dont la structure est au moins sensiblement régulière.

Dans l'exemple de la figure 1, l'intersection de la surface extérieure du matériau 1 avec les parois constituant les éléments du squelette de la mousse forme le réseau des veines ou nervures, désignées par la référence 2, qui sont visibles dans la figure 1.

La forme et les dimensions de ces nervures 2 dépendent évidemment de la forme et des dimensions des parois de la mousse qui sont coupées par la surface extérieure du matériau 1, ainsi que de la forme de cette surface extérieure et de son orientation par rapport à celle de ces parois.

Pour une raison qui sera rendue évidente plus loin, les éléments du squelette de la mousse que comporte le matériau 1 ont des dimensions telles que au moins une partie de ces nervures 2 sont aisément visibles à l'oeil nu, de même que au moins une partie des espaces qu'elles délimitent à la surface du matériau 1.

On voit que dans l'exemple représenté où la structure de la mousse est très irrégulière, la forme et les dimensions des nervures 2 sont bien sûr également très irrégulières. Il est évident que cette structure pourrait tout aussi bien être régulière.

Le matériau composite selon l'invention comporte également une matière solide qui imprègne la mousse rigide mentionnée ci-dessus, c'est-à-dire qui remplit complètement, ou presque complètement, les cavités délimitées par les parois de cette mousse.

Cette matière imprégnant la mousse apparaît évidemment à la surface du matériau 1, où elle forme des plages qui occupent les espaces délimités par les nervures 2. Ces plages sont désignées par la référence 3 dans la figure 1.

La forme et les dimensions de ces plages 3 sont évidemment déterminées par la forme et les dimensions des nervures 2 qui les entourent. Dans l'exemple de la figure 1, ces formes et ces dimensions sont bien sûr très irrégulières, mais elles pourraient tout aussi bien être sensiblement régulières.

On peut noter que, dans l'exemple de la figure 1, quelques-unes des plages 3 entourent entièrement des zones, dont l'une est désignée par la référence 2'. Ces zones 2' sont constituées de la même matière que les nervures 2. Selon les cas, elle peuvent être formées par des parois du squelette de la mousse qui, par hasard, ne sont pas reliées aux autres éléments de ce squelette dans la surface extérieure du matériau 1. Dans d'autres cas, il peut s'agir de l'intersection de la surface extérieure du matériau 1 avec des filaments qui font partie du squelette de la mousse.

Il faut noter à ce propos que si le squelette de la mousse est constitué en majorité de filaments, l'aspect extérieur du matériau selon l'invention est en quelque sorte inversé par rapport à celui du matériau représenté à la figure 1. Dans ce cas, les nervures apparaissant à la surface extérieure du matériau et les plages qu'elles délimitent sont respectivement formées par l'intersection de cette surface avec les cavités de la mousse et avec les éléments du squelette de celle-ci.

Il a été constaté que l'aspect du matériau composite qui vient d'être décrit dépend non seulement de la nature des matières utilisées pour fabriquer la mousse et pour remplir les cavités de cette dernière, mais également, et dans une très large mesure, des dimensions des nervures 2 et des plages 3.

Ainsi, si les nervures 2, ou la plupart d'entre elles, sont si minces qu'elles ne sont pas visibles à l'oeil nu, et/ou si les plages 3, ou la plupart d'entre elles, ont une surface si faible qu'on ne les distingue plus, toujours à l'oeil nu, le matériau composite 1 a généralement un aspect peu esthétique, ou au mieux un aspect qui est simplement celui de la matière de la mousse ou celui de la matière de remplissage, selon celle de ces matières qui prédomine à la surface du matériau composite.

Pour que ce dernier ait l'aspect esthétique recherché, il faut donc que les zones respectivement constituées par l'intersection de la surface extérieure du matériau composite avec les éléments du squelette et avec les cavités de la mousse, c'est-à-dire les nervures 2 et les plages 3 dans l'exemple de la figure 1, soient aisément visibles à l'oeil nu, au moins pour une partie d'entre elles.

L'expérience a montré qu'il faut, de préférence, que plus de 10 % environ des nervures telles que les nervures 2 aient une largeur minimum de 0,5 mm environ, et que plus de 10 % environ des plages délimitées par ces nervures n'aient aucune dimension transversale inférieure à 1 mm environ.

La fabrication du matériau composite décrit ci-dessus ne présente pas de difficulté particulière.

Les détails du procédé utilisé pour cette fabrication dépendent des matières choisies pour la mousse et pour le remplissage de celle-ci. Cependant, quelles que soient ces matières, ce procédé comprend toujours une étape d'obtention de la matière de remplissage sous forme liquide, une étape d'introduction de cette matière de remplissage sous forme liquide dans la mousse, et une étape de solidification de cette matière de remplissage.

Si la matière de remplissage est une matière plastique qui est fournie sous forme liquide par son fabricant, telle qu'une résine époxyde ou acrylique, elle ne nécessite évidemment pas de traitement particulier avant d'être introduite dans la mousse, si ce n'est éventuellement le mélange de ses composants.

Si la matière de remplissage est une matière thermoplastique, telle qu'un polystyrène ou un polyméthylmétacrylate (PMMA), elle doit évidemment être chauffée au moins jusqu'à sa température de fusion avant d'être introduite dans la mousse.

Il en est de même si la matière de remplissage est un métal.

Plusieurs caractéristiques physiques de la mousse et de la matière de remplissage déterminent la méthode la mieux adaptée à l'introduction de cette matière de remplissage dans cette mousse.

Parmi ces caractéristiques, on peut citer la viscosité et la tension superficielle de la matière de remplissage lorsqu'elle est dans son état liquide, les dimensions des cavités de la mousse et des ouvertures qui les font communiquer entre elles et avec l'extérieur de la mousse, la mouillabilité de la matière de cette mousse par la matière de remplissage sous forme liquide, etc....

Si la viscosité de la matière de remplissage sous forme liquide est faible, qu'elle mouille facilement la matière de la mousse, et que les cavités de cette mousse ainsi que les ouvertures qui les font communiquer entre elles et avec l'extérieur de la mousse sont relativement grandes, la matière de remplissage sous forme liquide peut simplement être versée sur la mousse, après que cette dernière a été disposée dans un récipient adéquat.

Dans les mêmes conditions, la mousse peut être plongée dans un bain de la matière de remplissage sous forme liquide, et retirée de ce bain après que cette matière de remplissage a rempli les cavités de la mousse.

Si la matière de remplissage sous forme liquide ne mouille pas suffisamment la matière de la mousse, il est possible de soumettre cette dernière à un traitement préalable destiné à améliorer sa mouillabilité.

Ainsi, par exemple, il est possible d'améliorer la mouillabilité d'une mousse en céramique par un métal dans son état liquide en trempant préalablement cette mousse dans une solution d'un composé organométallique adéquat.

Si la viscosité de la matière de remplissage sous forme liquide est trop élevée pour que les méthodes simples décrites ci-dessus puissent être utilisées, et/ou si les dimensions des cavités de la mousse et des ouvertures qui les relient sont trop faibles, il est possible de disposer la mousse dans un récipient adéquat, de verser sur cette mousse la matière de remplissage dans son état liquide, et d'exercer une pression sur cette matière de remplissage, par exemple par l'intermédiaire d'un piston adapté au récipient.

Toutes les opérations décrites ci-dessus peuvent être précédées d'une mise sous vide de la mousse, de manière que l'air qui remplit normalement les cavités de cette dernière soit éliminé avant l'introduction de la matière de remplissage.

De même, la mousse peut être soumise à des chocs ou des vibrations pendant ces opérations, pour faciliter et améliorer la pénétration de la matière de remplissage dans les cavités de la mousse.

Si la matière de remplissage se présente normalement sous forme solide et doit être chauffée pour prendre son état liquide, comme les matiéres thermoplastiques ou les métaux, il est possible de combiner les étapes de liquéfaction de cette matière et d'introduction de celle-ci dans la mousse. Pour cela, il suffit de disposer, dans le même récipient, la mousse et la matière de remplissage, sous forme solide, cette dernière étant de préférence posée sur la mousse. Le récipient contenant la mousse et la matière de remplissage est mis dans un four adéquat dans lequel la température est augmentée au moins jusqu'à la température de fusion de la matière de remplissage.

Cette dernière étant alors dans son état liquide, elle coule et pénètre dans les cavités de la mousse. Toutes les opérations destinées à faciliter la pénétration de la matière de remplissage dans les cavités de la mousse et qui ont été mentionnées ci-dessus peuvent évidemment aussi être réalisées dans ce cas.

Si la matière de remplissage est un métal, le four mentionné ci-dessus peut être un four à induction.

Après que la matière de remplissage a été introduite dans les cavités de la mousse, elle est rendue solide d'une manière qui dépend de sa nature.

Si cette matière de remplissage est une matière plastique qui est fournie sous forme liquide par son fabricant, sa solidification résulte, de manière bien connue, d'un processus de polymérisation qui est déclenché, par exemple, par le mélange des composants de cette matière plastique et/ou par un chauffage de celle-ci jusqu'à une température déterminée.

Si cette matière de remplissage est une matière thermoplastique ou un métal, sa solidification résulte évidemment de son refroidissement.

Le fait que la matière de remplissage soit introduite sous forme liquide dans les cavités de la mousse impose certaines limitations au choix des matières utilisables pour fabriquer le matériau selon l'invention.

Il faut en effet que la matière de remplissage, lorsqu'elle est dans son état liquide, ne détruise pas la mousse.

D'une manière générale, cette condition est remplie lorsque la température de la matière de remplissage dans son état liquide est inférieure à la température à laquelle la mousse commence à être détruite, par exemple par fusion ou ramollissement des éléments de son squelette.

Ainsi, si la mousse est en une matière thermoplastique, la matière de remplissage ne peut pratiquement être qu'un métal ou un alliage à basse température de fusion, ou une autre matière plastique. Cette dernière peut être une autre matière thermoplastique ayant une température de fusion inférieure à celle de la matière de la mousse, ou une matière plastique qui est liquide dans l'état où elle est fournie par son fabricant et qui durcit par polymérisation à froid ou avec une augmentation relativement faible de sa température.

Par exemple, si la matière de la mousse est un polyuréthane dont la température de fusion est de 180°C environ, la matière de remplissage peut être l'alliage eutectique d'étain et d'indium dont la température de fusion est de 120°C environ, ou l'alliage de bismuth, de plomb, d'étain et de cadmium qui est connu sous le nom de métal de Wood et dont la température de fusion est de 70°C environ.

Dans ce même exemple, la matière de remplissage peut être un tricaprilate de cellulose, qui est une matière thermoplastique dont la température de fusion est de 116°C environ, ou une résine époxyde ou acrylique vendue sous forme liquide et durcissant à faible température.

Si la matière de la mousse est métallique, la matière de remplissage peut être évidemment une matière plastique quelconque, ou un autre métal ayant une température de fusion inférieure à celle de la matière de la mousse. Dans ce dernier cas, il faut en outre veiller à ce que les deux métaux ne soient pas exagérément solubles l'un dans l'autre En outre, ces deux métaux ne doivent pas être trop éloignés l'un de l'autre dans la classification galvanique des métaux, pour que le matériau selon l'invention ait une bonne résistance à la corrosion.

Par exemple, si la mousse est en aluminium, dont la température de fusion est de 660°C environ, la matière de remplissage peut être n'importe lequel des alliages à basse température de fusion mentionnés ci-dessus, ou n'importe laquelle des matières plastiques également mentionnées ci-dessus. Cette matière de remplissage peut encore être un polyester ou un polystyrène, dont les températures de fusion sont évidemmemnt inférieures à celle de l'aluminium. Cette matiére de remplissage peut également être du plomb, dont la température de fusion est de 327°C, ou de l'étain, dont la température de fusion est de 232°C.

Si la mousse est en or, dont la température de fusion est de 1064°C, toutes les matières mentionnées ci-dessus peuvent évidemment être utilisées comme matière de remplissage.

En outre, cette dernière peut être de l'argent, dont la température de fusion est de 960°C.

Si la mousse est en platine, dont la température de fusion est de 1755°C, la matière de remplissage peut en outre être de l'or ou du cuivre dont les températures de fusion sont respectivement de 1064°C et de 1084°C.

Si la matière de la mousse est du carbone, la matière de remplissage peut également être une matière plastique ou un métal. Dans ce dernier cas, il faut cependant veiller à ce que le potentiel de corrosion du métal ne soit pas trop différent de celui du carbone dans la classification galvanique, à nouveau pour que le matériau selon l'invention ait une bonne résistance à la corrosion. Cette condition est notamment remplie si la matière de remplissage est de l'or ou de l'acier inoxydable.

Si la matière de la mousse est une céramique, il n'y a pratiquement pas de limitation dans le choix de la matière de remplissage.

On voit que l'aspect du matériau selon l'invention peut être varié à l'infini, puisque cet aspect dépend de la couleur et de la nature des matières choisies pour la mousse et pour remplir les cavités de celle-ci, et de la forme et des dimensions des éléments du squelette de cette mousse et des cavités délimitées par ces éléments.

On peut noter à ce propos qu'il est bien connu que la couleur des matières plastiques peut être modifiée en leur mélangeant des pigments. De même il est bien connu que la couleur de certaines céramiques, par exemple de l'oxyde d'aluminium, peut être modifiée en introduisant dans ces céramiques, pendant leur fabrication, des traces de métal.

Le matériau selon l'invention peut ainsi être fabriqué en utilisant des matières de couleurs différentes, ou de couleurs semblables mais dans des tons différents, ou encore des matières dont l'une est brillante et l'autre mate, etc....

Le matériau composite selon l'invention se prête sans difficulté à la confection de n'importe quel objet. Cependant, les qualités esthétiques de ce matériau le rendent évidemment particulièrement adapté à la confection d'un objet décoratif.

Cet objet peut être usiné dans un bloc du matériau selon l'invention ayant les dimensions voulues à l'aide de machines et d'outils classiques choisis bien entendu en fonction de la matière de la mousse et de la matière de remplissage.

Il peut être avantageux de donner à la mousse la forme et les dimensions de l'objet terminé avant d'introduire la matière de remplissage dans ses cavités. Le cas échéant, on donnera à la mousse des dimensions légèrement supérieures à celles de l'objet terminé, de manière à pouvoir exécuter des opérations de finissage, telles qu'un polissage, après avoir introduit la matière de remplissage dans les cavités de la mousse. Cette manière de faire évite des pertes qui peuvent être coûteuses, notamment si la matière de remplissage est une matière précieuse telle que l'or, l'argent ou le platine.

La figure 2 représente un élément de boîte de montre à titre d'exemple non limitatif d'un objet décoratif confectionné en utilisant le matériau selon l'invention.

Dans cet exemple, cet élément de boîte de montre, désigné par la référence 10, est une carrure extérieure, en forme d'anneau, destinée à entourer une carrure intérieure réalisée en une matière n'ayant pas de qualités esthétiques particulières mais se prêtant peut être plus facilement que le matériau selon l'invention aux usinages plus ou moins compliqués requis pour permettre la fixation du mouvement, de la glace et du fond de la montre.

Cette carrure intérieure, le mouvement, la glace et le fond de la montre n'ont pas été représentés, car ces éléments et la manière de les assembler les uns aux autres ainsi qu'à la carrure extérieure 10 sont bien connus, notamment par la demande de brevet EP-A-0 150 746.

On reconnaît à la figure 2 les nervures 2 et les plages 3 respectivement formées à la surface de la carrure 10 par les parois de la mousse et par la matière remplissant les cavités de cette mousse. On voit également dans cette figure 2 quelques zones, telles que la zone 2', qui sont semblables aux zones 2' de la figure 1.

Il faut relever que le matériau selon l'invention se prête également bien à la confection de carrures de formes différentes, auxquelles le mouvement, la glace et/ou le fond peuvent être directement fixés. Ces carrures peuvent également comporter des cornes destinées à fixer un bracelet de manière classique.

**Revendications**

1. Matériau composite destiné notamment à la confection d'objets décoratifs, comportant une mousse rigide à porosité ouverte comprenant un squelette formé d'éléments en une première matière, et une deuxième matière disposée dans les cavités de ladite mousse, caractérisé par le fait que lesdits éléments et lesdites cavités ont des dimensions telles que les zones respectivement constituées par l'intersection de la surface extérieure dudit matériau avec lesdits éléments et lesdites cavités sont visibles et peuvent être distinguées les unes des autres à l'oeil nu.

2. Matériau composite selon la revendication 1, caractérisé par le fait que ladite première matière est une céramique.

3. Matériau composite selon la revendication 1, caractérisé par le fait que ladite première matière est du carbone.

4. Matériau composite selon la revendication 1, caractérisé par le fait que ladite première matière est un métal.

5. Matériau composite selon la revendication 1, caractérisé par le fait que ladite première matière est une matière plastique.

6. Matériau composite selon l'une quelconque des revendications 1 à 5, caractérisé par le fait que ladite deuxième matière est une matière plastique.

7. Matériau composite selon l'une quelconque des revendications 1 à 5, caractérisé par le fait que ladite deuxième matière est un métal.

8. Procédé de fabrication du matériau composite de la revendication 1, caractérisé par le fait qu'il comporte l'obtention de la deuxième matière sous forme liquide, l'introduction de la deuxième matière dans les cavités de la mousse alors que cette deuxième matière est dans sa forme liquide, et la solidification de la deuxième matière après ladite introduction.

9. Procédé selon la revendication 8, caractérisé par le fait que ladite introduction comporte l'application d'une pression sur ladite deuxième matière sous sa forme liquide.

10. Procédé selon la revendication 8, caractérisé par le fait qu'il comporte en outre la mise sous vide de ladite mousse avant ladite introduction.

11. Objet décoratif, caractérisé par le fait qu'il comporte au moins une partie en matériau composite selon la revendication 1.

**Patentansprüche**

1. Komposit-Material, insbesondere bestimmt für die Konfektionierung dekorativer Gegenstände, umfassend einen offenporigen Hartschaum mit einem aus Elementen eines ersten Materials gebildeten Skelett sowie ein zweites in den Hohlräumen des Schaums angeordnetes Material, dadurch gekennzeichnet, daß die Elemente und Hohlräume Abmessungen derart aufweisen, daß die jeweils von der Intersektion der Außenoberfläche dieses Materials mit den Elementen und Hohlräumen gebildeten Zonen sichtbar sind und mit bloßem Auge unterschieden werden können.

2. Komposit-Material nach Anspruch 1, dadurch gekennzeichnet, daß das erste Material eine Keramik ist.

3. Komposit-Material nach Anspruch 1, dadurch gekennzeichnet, daß das erste Material Kohlenstoff ist.

4. Komposit-Material nach Anspruch 1, dadurch gekennzeichnet, daß das erste Material ein Metall ist.

5. Komposit-Material nach Anspruch 1, dadurch gekennzeichnet, daß das erste Material ein Kunststoffmaterial ist.

6. Komposit-Material nach einem der Ansprüche 1 bis 5, dadurch gekennzeichnet, daß das zweite Material ein Kunststoffmaterial ist.

7. Komposit-Material nach einem der Ansprüche 1 bis 5, dadurch gekennzeichnet, daß das zweite Material ein Metall ist.

8. Verfahren zum Herstellen des Komposit-Materials nach Anspruch 1, dadurch gekennzeichnet, daß es das Bereitstellen des zweiten Materials in flüssiger Form, das Einführen des zweiten Materials in die Hohlräume des Schaums, während das zweite Material in seiner flüssigen Form ist, und das Erstarrenlassen des zweiten Materials nach seiner Einführung umfaßt.

9. Verfahren nach Anspruch 8, dadurch gekennzeichnet, daß das Einführen das Einwirkenlassen eines Drucks auf das zweite Material in seiner flüssigen Form umfaßt.

10. Verfahren nach Anspruch 8, dadurch gekennzeichnet, daß es ferner das unter-Vakuum-Setzen des Schaums vor dem Einführen umfaßt.

11. Dekorativer Gegenstand, dadurch gekennzeichnet, daß er mindestens einen Bestandteil aus dem Komposit-Material nach Anspruch 1 umfaßt.

**Claims**

1. Composite material in particular intended for the production of decorative articles, comprising an open pore rigid foam, including a skeleton comprised of components made of a first material, and a second material disposed in the cavities of said foam, characterized in that said components and said cavities are so dimensioned that the zones constituted by the intersection of the outer surface of said composite material with said components and said cavities respectively are visible and may be distinguished from each other by the naked eye.

2. Composite material according to claim 1, characterized in that said first material is a ceramic.

3. Composite material according to claim 1, characterized in that said first material is carbon.

4. Composite material according to claim 1, characterized in that said first material is a metal.

5. Composite material according to claim 1, characterized in that said first material is a plastics material.

6. Composite material according to any one of the claims 1 to 5, characterized in that said second material is a plastics material.

7. Composite material according to any one of the claims 1 to 5, characterized in that said second material is a metal.

8. Process for the manufacture of the composite material of claim 1, characterized in that it comprises obtaining the second material in liquid form, introducing the second material into the cavities of the foam whilst this second material is in its liquid form, and solidifying the second material after said introduction.

9. Process according to claim 8, characterized in that said introduction comprises the application of pressure on said second material in its liquid form.

10. Process according to claim 8, characterized in that it further comprises the evacuation of said foam prior to said introduction.

11. Decorative articles, characterized in that it comprises at least a portion made of a composite material according to claim 1.

Fig. 1

Fig. 2